# EUROPEAN PATENT APPLICATION

(11) **EP 3 932 694 A1**
(43) Date of publication of application: **05.01.2022**
(21) Application number: 20763300.9
(22) Date of filing: 27.02.2020
(51) Int. Cl.: B60C 9/18, B60C 9/22, B60C 17/00

(54) **RUN-FLAT TIRE**

(30) Priority: 27.02.2019 JP 2019034105
(71) Applicant: BRIDGESTONE CORPORATION, Chuo-ku Tokyo 104-8340 (JP)
(72) Inventor: KURATA, Takayuki, Tokyo 104-8340 (JP)
(74) Representative: Oxley, Robin John George
(86) International application number: PCT/JP2020/008055
(87) International publication number: WO 2020/175627

(57) **Abstract**

The run flat tire (10) includes a tread portion (20) in contact with a road surface, a tire side portion (30) continuous to the tread portion and positioned inside in the radial direction of the tread portion (20), and a carcass (40) forming a tire skeleton. The run flat tire (10) is provided with a side reinforcing rubber (70) in tire side portion (30). A carcass reinforcing belt (50) formed by covering a circumferential direction cord (51) extending along tire circumferential direction with a rubber material and a sheet-like reinforcing layer (80) formed of a resin material are provided in layers on an inner side of the tire radial direction of the tread portion (20).

## Description

### [Technical Field]

The present invention relates to a run-flat tire having a carcass reinforcing belt formed by covering a circumferential direction cord with a rubber material.

### [Background Art]

Conventionally, a run-flat tire having a carcass reinforcing belt (called a crown reinforcing member) for reinforcing a carcass forming a tire skeleton has known. The carcass reinforcing belt is provided inside a tire radial direction of a tread portion contacting a road surface (see Patent Literature 1). The carcass reinforcing belt is formed by covering a circumferential direction cord extending to a tire circumferential direction with a rubber material.

Since the carcass reinforcing belt is provided as an alternative to the standard crossing belt layer, the crossing belt layer is not provided in tire disclosed in Patent Literature 1.

In the tire disclosed in Patent Literature 1, a sheet-like reinforcing layer formed of a resin material is provided outside a tire radial direction of a carcass reinforcing belt. Specifically, the reinforcing layer is formed of a thermoplastic polymer film. It is believed that such a reinforcing layer advantageously affects cornering rigidity of the tire.

### [Citation List]

### [Patent Literature]

[Patent Literature 1] Japanese Unexamined Patent Application Publication No. 2016-193725

### [Summary of Invention]

In the case of tire provided with the carcass reinforcing belt in which the circumferential direction cord is covered with a rubber material as described above, it is conceivable that there are the following problems when the run-flat traveling is to be realized.

Specifically, it is considered difficult to sufficiently suppress the buckling during run-flat traveling in the combination of the above-described carcass reinforcing belt and the sheet-like reinforcing layer formed of a resin material, rather than in the case of a standard crossing belt layer.

Accordingly, an object of the present invention is to provide a run-flat tire capable of more reliably suppressing a buckling when a carcass reinforcing belt having a circumferential direction cord extending to tire circumferential direction covered with a rubber material and a sheet-like reinforcing layer formed of a resin material are provided inside a tire radial direction of a tread portion.

One aspect of the present invention is a run-flat tire including a tread portion in contact with a road surface, a tire side portion continuous to the tread portion and positioned inside in the tire radial direction of the tread portion, and a carcass that forms tire skeleton. A side reinforcing rubber is provided in the tire side portion, and on an inner side of a tire radial direction of the tread portion, a carcass reinforcing belt in which a circumferential direction cord extending along tire circumferential direction is covered with a rubber material and a sheet-like reinforcing layer formed of a resin material are provided in a layer.

### [Brief Description of Drawings]

FIG. 1 is a cross-sectional view of a run flat tire 10.
FIG. 2 is a partially enlarged cross-sectional view of the run flat tire 10.
FIG. 3 is an exploded plan view of a portion of the run-flat tire 10.
FIG. 4 is a partially enlarged cross-sectional view of a run flat tire 10 A.
FIG. 5 is a partially enlarged cross-sectional view of a run flat tire 10 B.
FIG. 6 is a partially enlarged cross-sectional view of a run flat tire 10 C.
FIG. 7 is a partially enlarged cross-sectional view of a run flat tire 10 D.

### [Description of Embodiments]

Embodiments will be described below with reference to the drawings. The same functions and configurations are denoted by the same or similar reference numerals, and descriptions thereof are omitted as appropriate.

### (1) Overall structure of tire

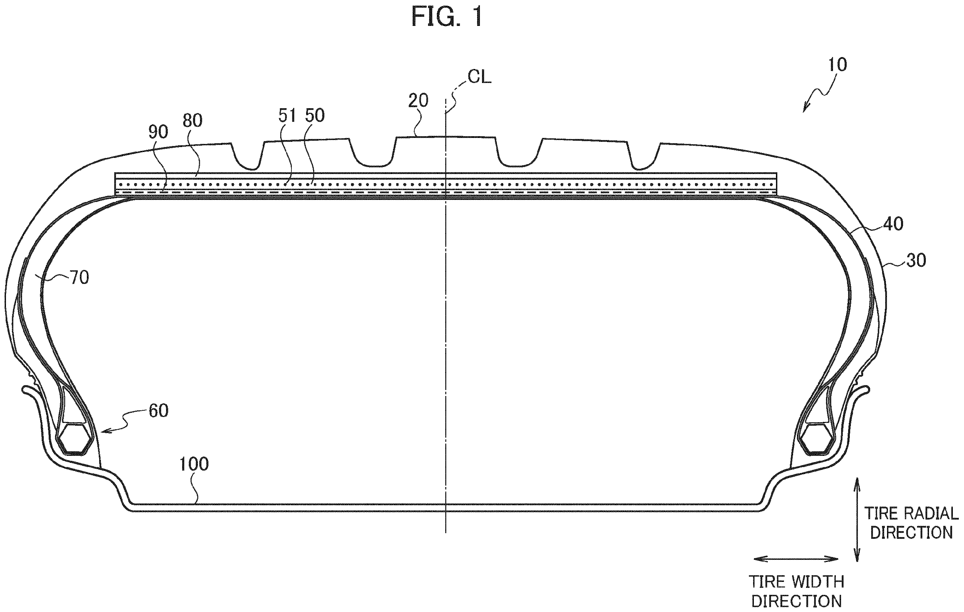

FIG. 1 is a sectional view of the run-flat tire 10 according to the present embodiment. Specifically, FIG. 1 is a cross-sectional view of the run flat tire 10 along tire width direction and tire radial direction. The run flat tire 10 has a mostly symmetrical shape with respect to tire equatorial line CL.

In FIG. 1, the sectional hatching is not shown (hereinafter the same). In order to facilitate the differentiation of similar components, a schematic pattern is shown for some components.

The run-flat tire 10 is capable of running (run flat running) at a constant speed for a certain distance (80 km at 80 km/h) even when the internal pressure (air pressure) is significantly reduced due to a puncture or the like (e.g., 0 kPa).

As shown in FIG. 1, the run flat tire 10 includes a tread portion 20, a tire side portion 30, a carcass 40, a carcass reinforcing belt 50, a bead portion 60, a side reinforcing rubber 70, a reinforcing layer 80, and a width direction treat 90.

The tread portion 20 is a part in contact with a road surface (not shown). On the tread portion 20, a pattern (not shown) corresponding to the use environment of the run-flat tire 10 and the type of vehicle to be mounted is formed.

The tire side portion 30 continues to the tread portion 20 and is positioned inside in the tire radial direction of the tread portion 20. The tire side portion 30 is a region from the tire width direction outside end of the tread portion 20 to the upper end of the bead portion 60. The tire side portion 30 is sometimes referred to as a side wall or the like.

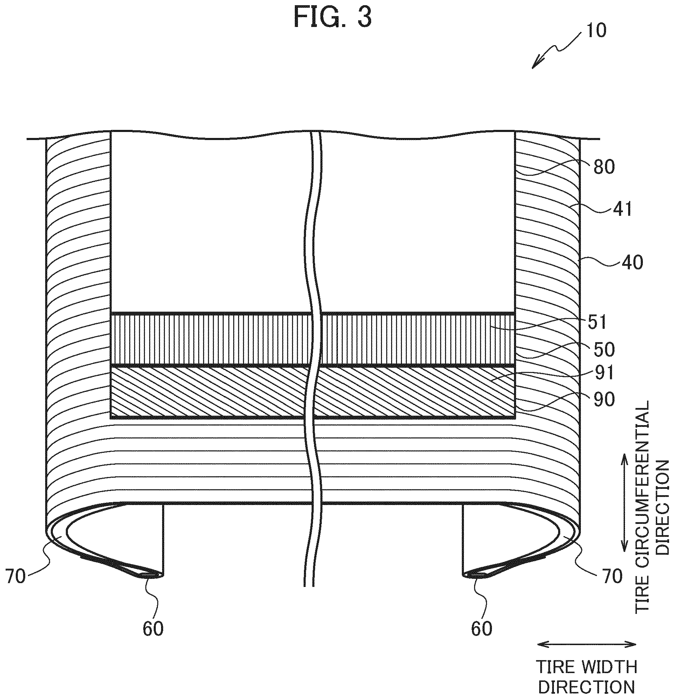

The carcass 40 forms a skeleton (tire skeleton) of a run-flat tire 10. The carcass 40 has a radial structure in which carcass cords 41 (not shown in FIG. 1, see FIG. 3) arranged radially along a tire radial direction is covered with a rubber material. However, the present invention is not limited to a radial structure, and a bias structure in which the carcass cords 41 are arranged so as to cross each other in the tire radial direction may be used.

The carcass cord 41 is not particularly limited, and may be formed of an organic fiber cord in the same manner as a tire for a standard passenger car (including minivans and SUV (Sport Utility Vehicles)).

The carcass reinforcing belt 50 is provided inside the tire radial direction of the tread portion 20. The carcass reinforcing belt 50 is provided mainly for reinforcing the carcass 40. In this embodiment, the carcass reinforcing belt 50 is a belt that replaces the conventional standard crossing belt layer. Therefore, the run flat tire 10 is not provided with a crossing belt layer.

The carcass reinforcing belt 50 has a circumferential direction cord 51 covered with a rubber material.

Specifically, the circumferential cord 51 extends along the tire circumferential direction. The term "extending along the tire circumferential direction " includes a state in which the circumferential direction cord 51 is disposed in parallel with tire circumferential direction and a state in which the circumferential direction cord 51 is disposed so as to be inclined to form an angle of within ± 10 degrees with respect to tire circumferential direction.

The circumferential direction cord 51 may be formed of a metal cord, such as steel, or an organic fiber cord, such as aramid.

Also, the circumferential direction cords 51 may be disposed at a plurality of substantially constant distances in the tire width direction or may be a single cord spirally wound along the tire circumferential direction. The rubber material covering the circumferential direction cord 51 can be the same as, for example, the rubber material used for the carcass 40 or the rubber material used for a standard crossing belt layer.

Further, the shape of the carcass reinforcing belt 50 may be a spiral belt which covers one or more circumferential direction cords 51 and is cut to a predetermined width, or may be a plurality of strip-like belts which are arranged inclined with respect to the tire circumferential direction. Alternatively, the shape of the carcass reinforcing belt 50 may be an annular belt provided from one shoulder portion to the other shoulder portion of the tread portion 20.

The bead portion 60 continues to tire side portion 30 and is positioned inside in tire radial direction of tire side portion 30. The bead portion 60 is an annular shape extending to the tire circumferential direction.

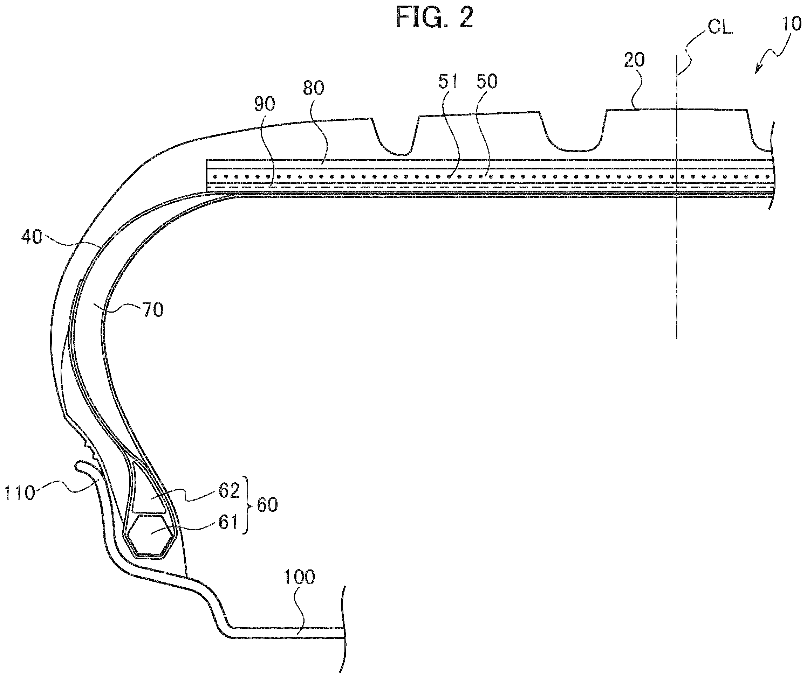

The bead portion 60 is locked to a flange portion 110 (not shown in FIG. 1, see FIG. 2) formed at the radially outside end of the rim wheel 100.

The side reinforcing rubber 70 is provided in the tire side portion 30. The side reinforcing rubber 70 has a crescent shape in cross section, and supports a load of a vehicle (not shown) to which the run-flat tire 10 is mounted when the internal pressure of the run-flat tire 10 greatly decreases.

The side reinforcing rubber 70 may be formed of one or more kinds of rubber materials, or may contain other materials (short fiber, resin, etc.) if the rubber material is a main component.

The reinforcing layer 80 is provided outside the tire radial direction of the carcass reinforcing belt 50. The reinforcing layer 80 is formed of a resin material and has a sheet-like shape.

The reinforcing layer 80 may be formed of, for example, a thermoplastic polymer. Specifically, a thermoplastic polymer film (multiaxially oriented film) that is stretched or oriented in two or more directions can be used. The thermoplastic polymer film at least has a tensile elastic modulus greater than at least 500 MPa, and preferably has a tensile elastic modulus greater than 2,000 MPa, regardless of the tensile direction.

The reinforcing layer 80 may not necessarily be formed of a thermoplastic polymer, but may be formed of a thermosetting polymer having a crosslinked structure.

The width direction treat 90 is provided inside the tire radial direction of the carcass reinforcing belt 50. The width direction treat 90 has a predetermined width in the tire width direction. The width direction treat 90 is a rubber treat obtained by covering a width direction cord 91 (not shown in FIG. 1, see FIG. 3) extending to the tire width direction with a rubber material.

The width direction treat 90 can be formed of the same kind of rubber as rubber used for forming the carcass 40 or rubber used for forming a bead filler 62 (not shown in FIG. 1, see FIG. 2).

In the run flat tire 10, the carcass reinforcing belt 50, the reinforcing layer 80 and the width direction treat 90 are provided in layers at the inside of the tread portion 20 in the tire radial direction.

### (2) Detailed structure of inside tire radial direction of tread portion

FIG. 2 is a partially enlarged sectional view of the run-flat tire 10. Specifically, FIG. 2 is a partially enlarged sectional view of the run-flat tire 10 taken along the tire width direction and the tire radial direction. FIG. 3 is a partially exploded plan view of the run-flat tire 10.

As shown in FIGs. 2 and 3, the bead portion 60 has a bead core 61 and the bead filler 62. In this structure example, the bead core 61 has a popular configuration and is formed by twisting a plurality of metal cords formed of steel or the like.

The bead filler 62 is a reinforcing member filled in a gap between the carcasses 40 folded back via the bead core 61, and is formed by using a rubber member harder than other parts.

The bead portion 60 may comprise a bead core formed by covering a metal cord with a resin material or a bead core formed by using a resin material.

In the run flat tire 10, the reinforcing layer 80, the carcass reinforcing belt 50 and the width direction treat 90 are stacked from outside to inside of the tire radial direction.

The reinforcing layer 80 is in contact with the carcass reinforcing belt 50. The width direction treat 90 is also in contact with the carcass reinforcing belt 50. Thus, a three-layer structure of the reinforcing layer 80, the carcass reinforcing belt 50 and the width direction treat 90 is formed.

The carcass reinforcing belt 50 may or may not contact the carcass 40. A rubber or the like forming the tread portion 20 or the tire side portion 30 may be substantially partially interposed between the carcass reinforcing belt 50 and the reinforcing layer 80 and between the carcass reinforcing belt 50 and the width direction treat 90.

The reinforcing layer 80 does not have any particular cords and is an annular seat along tire circumferential direction. The widthwise treat 90, on the other hand, has a width direction cord 91 extending to the tire width direction.

It should be noted that the portion extending to the tire width direction may be substantially along the tire width direction, and may be so long as the width direction cord 91 is not along the tire circumferential direction. Specifically, the angle between the width direction cord 91 and the tire width direction is preferably 0 to 60 degrees.

The width direction cord 91 may be formed of a metal material, such as steel, or an organic fiber, such as Kevlar, nylon, or polyethylene terephthalate (PET).

### (3) Modified example

Next, modified example of the run flat tire 10 will be described. The parts different from the run-flat tire 10 will be mainly described below.

### (3.1) Modified example 1

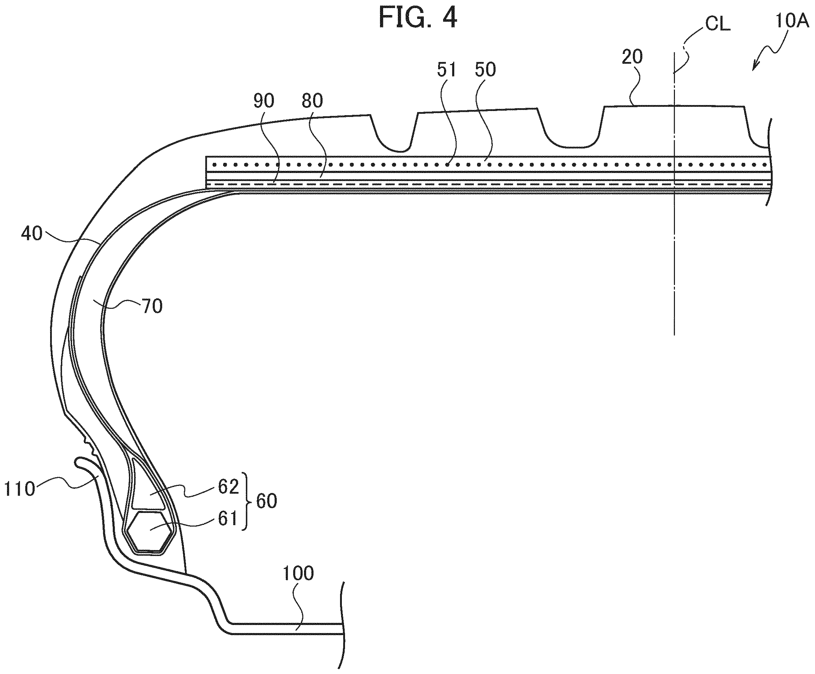

FIG. 4 is a partially enlarged sectional view of the run flat tire 10 A. As shown in FIG. 4, the run-flat tire 10 A, like the run-flat tire 10, includes the carcass reinforcing belt 50, the reinforcing layer 80, and the width direction treat 90.

In the run flat tire 10 A, the carcass reinforcing belt 50, the reinforcing layer 80 and the width direction treat 90 are stacked from outside to inside of the tire radial direction.

### (3.2) Modified example 2

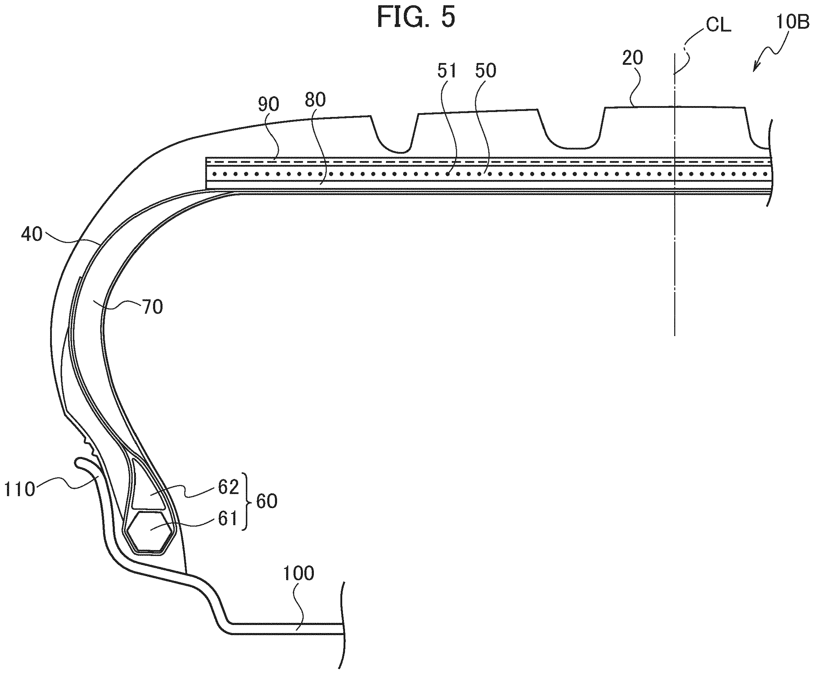

FIG. 5 is a partially enlarged sectional view of the run flat tire 10 B. As shown in FIG. 5, the run-flat tire 10 B, like the run-flat tire 10, includes the carcass reinforcing belt 50, the reinforcing layer 80, and the width direction treat 90.

In the run flat tire 10 B, the width direction treat 90, the carcass reinforcing belt 50 and the reinforcing layer 80 are stacked from outside to inside of the tire radial direction.

### (3.3) Modified example 3

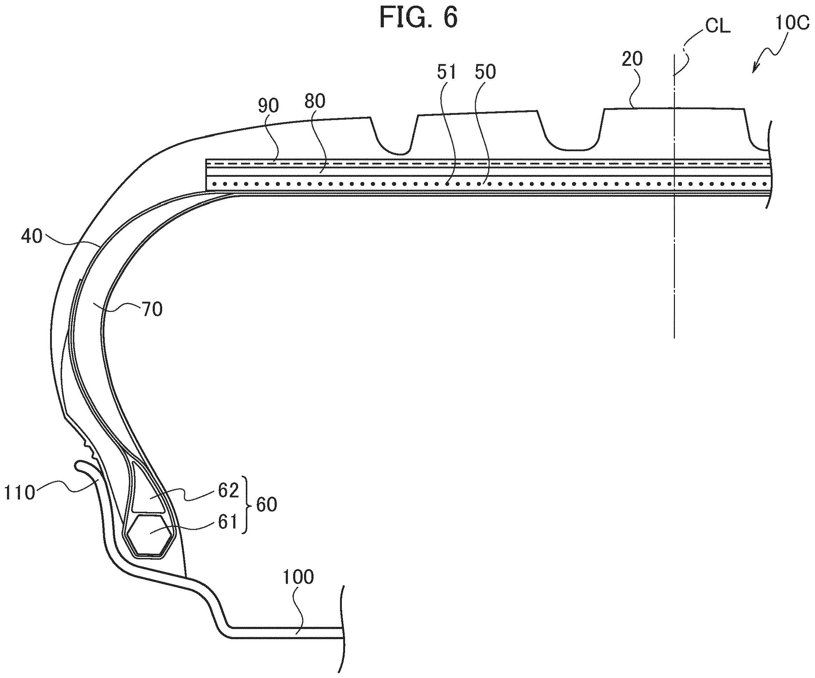

FIG. 6 is a partially enlarged sectional view of the run flat tire 10 C. As shown in FIG. 6, the run-flat tire 10 C, like the run-flat tire 10, includes the carcass reinforcing belt 50, the reinforcing layer 80, and the width direction treat 90.

In the run flat tire 10 C, the width direction treat 90, the reinforcing layer 80 and the carcass reinforcing belt 50 are stacked from outside to inside of the tire radial direction.

### (4) Function and effects

Next, the function and effects of the run flat tires 10, 10 A to 10 C will be described. In the run flat tires 10, 10 A to 10 C, the side reinforcing rubber 70 is provided in the tire side portion 30, and the carcass reinforcing belt 50, the reinforcing layer 80 and the width direction treat 90 are provided in layers at the inside of the tread portion 20 in the tire radial direction.

Therefore, even in the case of not a standard crossing belt layer but the carcass reinforcing belt 50 in which the circumferential direction cord 51 is covered with a rubber material and the sheet-like reinforcing layer 80 formed of a resin material, the side reinforcing rubber 70 can effectively suppress buckling during run flat traveling.

In the run flat tires 10, 10 A to 10 C, the carcass reinforcing belt 50, the reinforcing layer 80 and the width direction treat 90 are provided in layers, so that failure of the carcass reinforcing belt 50 caused by overriding a sharp projection or the like of a road surface can be more surely prevented.

More specifically, since the carcass reinforcing belt 50 formed by covering the circumferential direction cord 51 with a resin material is protected and reinforced by the reinforcing layer 80 and the width direction treat 90, the bending deformation of the carcass reinforcing belt 50 during run-flat traveling and the failure caused by the bending deformation can be suppressed.

That is, with the run flat tires 10, 10 A to 10 C, the suppression of the buckling and the failure prevention of the carcass reinforcing belt 50 can be made compatible in a high dimension.

In particular, in the case of a structure in which the carcass reinforcing belt 50 is sandwiched by the reinforcing layer 80 and the width direction treat 90, such as the run flat tire 10 and the run flat tire 10 B, the reinforcing layer 80 and the width direction treat 90 function as reinforcing materials for the carcass reinforcing belt 50, but since the distance between the reinforcing layer 80 and the width direction treat 90 in tire radial direction can be secured, the in-plane (cross section along tire width direction and tire radial direction) rigidity when the carcass reinforcing belt 50, the reinforcing layer 80 and the width direction treat 90 are integrally captured can be increased.

Thus, the durability against the failure of the carcass reinforcing belt 50 caused by overriding a sharp projection or the like of a road surface is greatly improved, and the run-flat traveling distance is also lengthened.

The durability against the failure of the carcass reinforcing belt 50 is higher when the width direction cord 91 included in the width direction treat 90 is made of steel than Kevlar or the like. Further, as the angle formed by the width direction cord 91 with tire width direction approaches 60 degrees, the cornering force tends to rise and the cornering power increases.

In addition, when the carcass reinforcing belt 50, the reinforcing layer 80 and the width direction treat 90 are stacked from outside to inside of the tire radial direction as in the run flat tire 10 A, the durability to the failure of the carcass reinforcing belt 50 is greatly improved.

Note that the run-flat tire 10 C exhibits intermediate performance (however, depending on the angle and material of the width direction cord 91) in terms of durability against failure of the carcass reinforcing belt 50 and the run-flat traveling distance as compared with the run-flat tire 10 and the run-flat tire 10 B.

### (5) Other embodiments

Although the contents of the present invention have been described above with reference to the examples, it will be obvious to those skilled in the art that the present invention is not limited to these descriptions and that various modifications and improvements are possible.

For example, the width direction treat 90 provided in the run-flat tire 10 may not necessarily be provided.

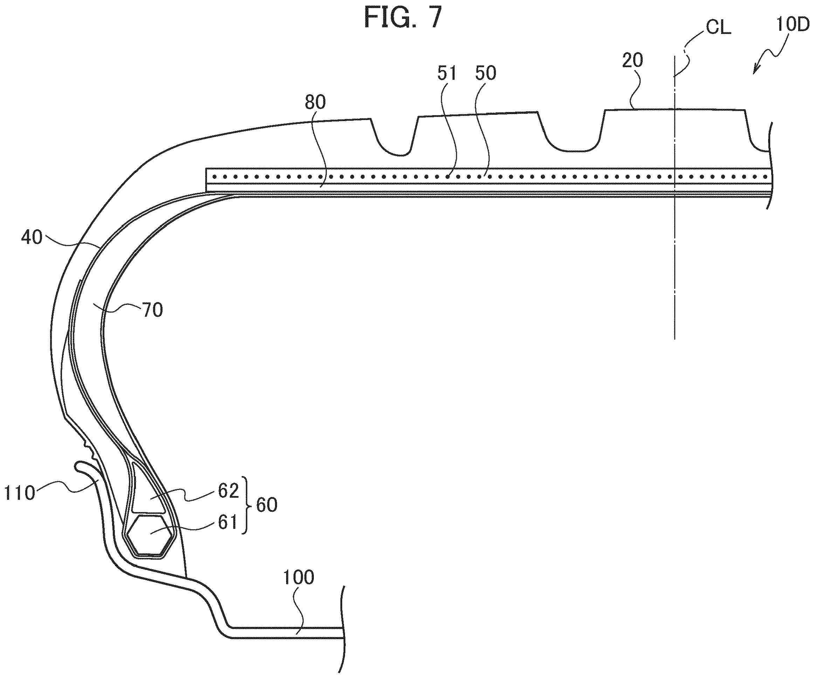

FIG. 7 is a partially enlarged sectional view of the run-flat tire 10 D according to another embodiment. As shown in FIG. 7, the run-flat tire 10 D is provided with the reinforcing layer 80 compared with the run-flat tire 10 or the like, but is not provided with the width direction treat 90.

That is, in the run flat tire 10 D, the side reinforcing rubber 70 is provided in tire side portion 30, and the carcass reinforcing belt 50 and the reinforcing layer 80 are provided in layers on the inside in tire radial direction of the tread portion 20.

In the run-flat tire 10 D, since the side reinforcing rubber 70 is provided, even when the carcass reinforcing belt 50 in which the circumferential direction cord 51 is covered with a rubber material and the sheet-like reinforcing layer 80 formed of a resin material are provided, the buckling can be more surely restrained.

While embodiments of the invention have been described as above, it should not be understood that the statements and drawings which form part of this disclosure are intended to limit the invention. Various alternative embodiments, examples and operating techniques will become apparent to those skilled in the art from this disclosure.

### [Reference Signs List]

10, 10 A to 10 D Run-flat tire
20 Tread portion
30 Tire side portion
40 Carcass
41 Carcass cord
50 Carcass reinforcing belt
51 Circumferential direction cord
60 Bead portion
61 Bead Core
62 Bead filler
70 Side reinforcing rubber
80 Reinforcing layer
90 Width direction treat
91 Width direction cord
100 Rim wheel
110 Flange portion

## Claims

1. A run-flat tire comprising:
a tread portion in contact with a road surface;
a tire side portion continuous to the tread portion and positioned inside in a tire radial direction of the tread portion; and
a carcass that forms tire skeleton, wherein
a side reinforcing rubber is provided in the tire side portion, and
on an inner side of a tire radial direction of the tread portion, a carcass reinforcing belt in which a circumferential direction cord extending along tire circumferential direction is covered with a rubber material and a sheet-like reinforcing layer formed of a resin material are provided in a layer.

2. The run flat tire according to claim 1, further comprising a width direction treat formed by covering a width direction cord extending to the tire width direction with a rubber material inside the tire radial direction of the tread portion.

3. The run-flat tire according to claim 2, wherein the reinforcing layer, the carcass reinforcing belt and the width direction treat are stacked from outside to inside of the tire radial direction.

4. The run-flat tire according to claim 2, wherein the width direction treat, the carcass reinforcing belt and the reinforcing layer are stacked from outside to inside of the tire radial direction.

5. The run-flat tire according to claim 2, wherein the width direction treat, the reinforcing layer and the carcass reinforcing belt are stacked from outside to inside of the tire radial direction.

6. The run-flat tire according to claim 2, wherein the carcass reinforcing belt, the reinforcing layer and the width direction treat are stacked from the outside to inside of the tire radial direction.

7. The run-flat tire according to claim 2, wherein an angle formed by the width direction cord and the tire width direction is 0 degrees or more and 60 degrees or less.
